# EUROPÄISCHE PATENTSCHRIFT

(11) **EP 2 181 414 B1**
(45) Veröffentlichungstag und Bekanntmachung des Hinweises auf die Patenterteilung: **14.06.2017**
(21) Anmeldenummer: 08785730.6
(22) Anmeldetag: 28.08.2008
(51) Int. Cl.: G06K 9/00

(54) **VERFAHREN UND ANORDNUNG ZUR AUSWERTUNG VON HELLIGKEITSWERTEN IN SENSORBILDERN BEI BILDAUSWERTENDEN UMFELDERKENNUNGSSYSTEMEN**
METHOD AND SYSTEM FOR EVALUATING BRIGHTNESS VALUES IN SENSOR IMAGES OF IMAGE-EVALUATING ADAPTIVE CRUISE CONTROL SYSTEMS
PROCÉDÉ ET DISPOSITIF POUR ÉVALUER DES VALEURS DE LUMINOSITÉ SUR DES IMAGES DÉTECTÉES, POUR SYSTÈMES DE RECONNAISSANCE D'ENVIRONNEMENT À INTERPRÉTATION D'IMAGES

(30) Priorität: 28.08.2007 US 966750 P
(43) Veröffentlichungstag der Anmeldung: 05.05.2010
(73) Patentinhaber: Valeo Schalter und Sensoren GmbH, 74321 Bietigheim-Bissingen (DE)
(72) Erfinder: KUEHNLE, Andreas, Villa Park, CA 92861 (US); BOON, Cathy, Orange, CA 92867 (US)
(86) Internationale Anmeldenummer: PCT/EP2008/007032
(87) Internationale Veröffentlichungsnummer: WO 2009/030418

(56) Entgegenhaltungen:
- EP-A- 1 708 125
- DE-A1- 19 743 580
- ROTARU C ET AL: "Extracting road features from color images using a cognitive approach" INTELLIGENT VEHICLES SYMPOSIUM, 2004 IEEE PARMA, ITALY JUNE 14-17, 2004, PISCATAWAY, NJ, USA,IEEE, 14. Juni 2004 (2004-06-14), Seiten 298-303, XP010727485 ISBN: 978-0-7803-8310-4
- BERTOZZI M ET AL: "Vision-based intelligent vehicles: State of the art and perspectives" ROBOTICS AND AUTONOMOUS SYSTEMS, ELSEVIER SCIENCE PUBLISHERS, AMSTERDAM, NL, Bd. 32, Nr. 1, 1. Juli 2000 (2000-07-01), Seiten 1-16, XP004205091 ISSN: 0921-8890
- VLACIC LJUBO ED - VLACIC LJUBO: "Intelligent vehicle technologies, chapter 14: ARGO prototype vehicle" INTELLIGENT VEHICLE TECHNOLOGIES: THEORY AND APPLICATIONS, BUTTERWORTH-HEINEMANN, OXFORD, 1. Januar 2001 (2001-01-01), Seite 454,490, XP002538660 ISBN: 978-0-7506-5093-9

## Beschreibung

### Stand der Technik

Die Erfindung betrifft ein Verfahren und eine Anordnung zur Auswertung von Helligkeitswerten, insbesondere zum Beispiel von dunklen Bereichen als Schatten eines statischen Objekts, in Sensorbildern eines bildauswertenden Umfelderkennungssystems, wie es vorzugsweise bei Fahrassistenzsystemen in Kraftfahrzeugen verwendet wird, gemäß dem Oberbegriff des Verfahrensanspruchs 1 ff. und der Anordnung nach Anspruch 8 ff. sowie ein Computerprogrammprodukt gemäß Anspruch 12.

Solche Fahrassistenzsysteme dienen der Unterstützung eines Fahrers eines Kraftfahrzeugs bei der Durchführung bestimmter Vorgänge im Straßenverkehr und werden bereits für unterschiedlichste Aufgaben eingesetzt. Beispielsweise ist aus der DE 10 2004 017 890 A1 bekannt, dass mit einem sogenannten LIDAR-Radarsensor ein vorgegebener Bereich in der Fahrtrichtung voraus des Fahrzeugs hinsichtlich bestimmter Objekte detektiert wird und durch eine entsprechende Auswertung der Sensorsignale rechtzeitig bestimmte Sicherheitsfunktionen ausgelöst werden können.

Diese an sich bekannten Systeme können beispielsweise im Rahmen einer adaptiven Fahrgeschwindigkeits- und/oder Abstandsregelung eines Fahrzeugs eingesetzt werden, wobei eine solche Regelung dann ohne Eingriff durch den Fahrer eine zuvor eingestellte Fahrgeschwindigkeit und/oder einen zuvor eingestellten Abstand zu einem vorausfahrenden Fahrzeug oder zu sich in Fahrtrichtung befindlichen Gegenständen und/ oder Objekten durchgeführt werden kann. Dies geschieht in der Regel unter entsprechender Berücksichtigung des Umfelds des Fahrzeuges und gegebenenfalls weiterer Parameter wie beispielsweise den Witterungs- und Sichtbedingungen. Eine solche Regelung wird oft auch als Adaptive-Cruise-Control-System (ACC-System) bezeichnet. Das ACC-System muss insbesondere mit Blick auf die steigende Verkehrsdichte der heutigen Zeit flexibel genug sein, um auf alle Fahrsituationen geeignet zu reagieren. Dies erfordert wiederum eine entsprechende Objektdetektionssensorik, um in jeder Fahrsituation die für die Regelung notwendigen Messdaten zu liefern.

Hierzu werden auch Kamera- oder Videobilder bei bildauswertenden oder auch sogenannten visionbasierenden Fahrassistenzsystemen zur Umfelderfassung verwendet, wobei bei den bekannten Systemen aus den Kamerabildern Objekte, Hindernisse, Fahrbahn- und Fahrspurbegrenzungen sowie Abstände hierzu bestimmt werden. Zur eigentlichen Bilderfassung werden in sogenannten visionbasierenden Umfelderfassungssystemen als Imager bezeichnete Bildsensoren eingesetzt, welche dann ein auch als Sensorbild bezeichnetes Kamerabild der erfassten Umgebung liefern, deren Bildpunkte (Pixel) oder Bildbereiche hinsichtlich Intensität, Kontrast, Farbe oder sonstiger Parameter mit entsprechenden datenverarbeitenden Mitteln ausgewertet werden können.

Bei der Analyse dieser Videobilder können jedoch Brücken oder ähnliche statische Strukturen oder Objekte, wie Überführungen etc., Probleme in der Videobildanalyse wegen der Lichteffekte verursachen, die durch bei bestimmten Lichtverhältnissen auf die Fahrbahn geworfene Schatten entstehen. Die Patentschriften EP1708125 sowie DE19743580 offenbaren bildauswertende Fahrerassistenzsysteme, welche bereits im Vorraus dunkle Regionen in Form von Tunneleinfahrten erkennen. Der Konferenzartikel Rotaru et al. "Extracting Road Features from Color Images using a Cognitive Approach", IEEE Intelligent Vehicle Symposium, Parma, IT (2004), befasst sich u.a. mit der Detektion von Schatten auf der Fahrbahn.

### Offenbarung der Erfindung

Die Erfindung, welche in den Ansprüchen 1-7 definiert ist, geht von einem Verfahren zur Auswertung von Sensorbildern eines bildauswertenden Umfelderkennungssystems an einem bewegten Träger, zum Beispiel ein Fahrzeug im Straßenverkehr, aus, bei dem erfindungsgemäß in vorteilhafter Weise in zeitlich aufeinanderfolgenden Auswerteschritten relativ zur Umgebung dunkle Bereiche in den erfassten Sensorbildern dahingehend ausgewertet werden, ob sie sich mit der Geschwindigkeit des Trägers auf diesen zubewegen, und dass diese dunklen Bereiche als Schatten eines statischen Objekts, zum Beispiel eine Brücke, eine Überführung oder dergleichen, erkannt werden und eine entsprechende Signalisierung vorgenommen wird. Die Erfindung ist insbesondere in Verbindung mit einem Fahrerassistenzsystem mit visueller bzw. optischer Umfelderfassung in einem Kraftfahrzeug vorteilhaft anwendbar, bei der das Kraftfahrzeug ein Spurhalteunterstützungssystem hat.

Mit der Erfindung wird somit eine vorteilhafte Methode für die Erfassung und Auswertung solcher Schatten, die von anderen beweglichen oder sonstigen störenden Helligkeitsunterschiede verursachenden Objekten unterschieden werden müssen, durch eine Zeitreihenanalyse der vom Fahrzeug erfassten Sensorbilder vorgeschlagen. Als Ausgangssignal bzw. zur Signalisierung des Auftretens eines solchen Schattens kann auf einfache Weise zum Beispiel ein binäres flag im Umfelderkennungssystem gesetzt werden, das kennzeichnet, ob vor dem Fahrzeug eine plötzliche Schattensituation auftritt oder nicht und wenn es gewünscht wird, auch wie weit man von dieser Situation entfernt ist.

Hierbei können jeweils Pixel, eine Reihe oder ein Bereich von Pixeln des Sensorbildes, die relativ zur Umgebung dunkel sind, hinsichtlich ihres Abstandes zum Träger des bildauswertenden Umfelderkennungssystems ausgewertet werden. Bevorzugt können diese Pixel, eine Reihe oder ein Bereich von Pixeln auch in zeitlich aufeinanderfolgenden Auswerteschritten dahingehend ausgewertet werden, ob und in welchen Zeitabständen sie in Richtung auf den Träger definierte Erfassungsbereiche innerhalb des Sensorbildes nacheinander belegen.

Es wird ferner eine vorteilhafte Anordnung zur Durchführung des zuvor beschriebenen Verfahrens vorgeschlagen, bei der das bildauswertende Umfelderkennungssystems eine elektronische Videokamera (z. B. eine CCD-Kamera oder CMOS-Imager) enthält, die an einem Fahrzeug als Träger angebracht ist und den in Fahrtrichtung vorderen Bereich des Fahrzeugs derart fortlaufend erfasst, dass jeweils ein aus Pixeln aufgebautes Sensorbild vorhanden ist, deren Helligkeits- und gegebenenfalls Farbwerte die Umgebung abbilden. Weiterhin ist dabei eine Auswerteeinheit vorhanden, in der dunklen Bereiche im Sensorbild als Schatten eines statischen Objekts erfassbar sind und eine entsprechende Signalisierung durchführbar ist.

Die Auswerteeinheit kann dabei auf einfache Weise zusätzlich mit der mit anderen Mitteln erfassten Geschwindigkeit des Fahrzeugs beaufschlagt werden. Die Signalisierung kann mittels einer Anzeigeeinheit erfolgen, in der das Erfassen, das Verlassen und der jeweilige Abstand des Schattens zum Fahrzeug anzeigbar ist.

Um die mit der Kamera erfassten digitalen Daten auszuwerten, wird ferner ein Computerprogrammprodukt vorgeschlagen, das auf einem computerverwendbaren Medium gespeichert ist, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens oder einer Anordnung zur Durchführung eines Verfahrens in einem Umfelderkennungssystem veranlassen.

Bei der Ausführung des erfindungsgemäßen Verfahrens oder der Anwendung der vorgeschlagenen Anordnung kann davon ausgegangen werden, dass die Kamerageometrie so gestaltet ist, dass mit der Annahme, dass die Fahrbahn voran flach ist und dass die innen im Fahrzeug angebrachte Kamera nicht erheblich um die eigene Achse rollt, eine Reihe oder ein Pixel im Sensorbild mit einem Abstand vor dem Fahrzeug verbunden werden kann. Es können somit Erfassungsbereiche als Regionen im Bild in spezifischen Abständen von der Videokamera konstruiert werden. Wenn in einem Erfassungsbereich, der weit entfernt ist, ein dunkler Bereich auftritt und sich mit der Geschwindigkeit des Fahrzeugs dem Fahrzeug nähert, kann somit ein stationärer Schatten genau lokalisiert werden.

Eine Belegung eines Erfassungsbereichs kann beispielsweise dann detektiert werden, wenn ca. 80 Prozent der Pixel dieses Erfassungsbereichs einen Helligkeitswert unterhalb einer vorgegebenen Schwelle aufweisen. Ein Verlassen der Erfassungsbereiche kann dann detektiert werden, wenn ca. 20 Prozent der Pixel dieses Erfassungsbereichs einen Helligkeitswert oberhalb einer vorgegebenen Schwelle aufweisen.

Ein solcher plötzlich auftretender Schatten ist somit durch einen Bereich definiert, der relativ zu seiner Umgebung dunkel ist. Der relative Unterschied zu der Umgebung muss jedoch bei der Bildverarbeitung des Sensorbildes kritisch betrachtet werden, da solche zu betrachtende dunkle Bereiche oft einen sehr niedrigen Kontrast haben und eine Bildauswertung innerhalb solcher Bereiche oft sehr schwierig ist. Daher ist es sinnvoll, wenn hier eine Schwelle für eine ausreichende Dunkelheit innerhalb einer Graustufenstatistik gesetzt wird und außerdem ein zeitlich früher detektierter Erfassungsbereich nicht entsprechend ausreichend dunkel war.

Die Erfassungsbereiche erstrecken sich beispielsweise jeweils über 20m in Fahrtrichtung über die Fahrbahn und wenn hier, beispielsweise in einer Entfernung zwischen 60m und 80m, ein Anteil von zum Beispiel 80 Prozent dunkel ist, dann kann man relativ sicher sein, dass es sich hier um einen Schatten handelt.

Eine Bestätigung, dass dieser dunkle Bereich (Schatten) sich dem Fahrzeug nähert, kann dadurch erfolgen, dass er nach einer bestimmten Zeit später in einem Erfassungsbereich näher an der Kamera detektiert wird. Im Einzelnen kann man, wie zuvor schon erwähnt, fordern, dass zum Beispiel immer die Helligkeitswerte in 80 Prozent eines Erfassungsbereichs zwischen 40m und 60m kleiner als eine vorgegebene Schwelle sind. Sobald eine solche Situation mit einem dunklen Bereich zunächst in Fahrtrichtung in einem fernen Erfassungsbereich voraus und darauf folgend in einem näheren Erfassungsbereich, zum Beispiel zwischen 40m und 20m, detektiert ist, kann dieser Schatten bestätigt werden. Ein solche Reihenfolge kann somit beispielsweise derart ablaufen, dass zunächst ein dunkler Bereich zwischen 80m und 60m, gefolgt vom Bereich zwischen 60m und 40m und dann ein Bereich von 40m und 20m ausgewertet wird.

Die Auswertung der Pixel, einer Reihe oder ein Bereich von Pixeln, in einem vorgegebenen Zeitraum kann in vorteilhafter Weise auch mit einer entsprechenden Belichtungs- und Empfindlichkeitssteuerung erfolgen, bevor eine automatische Belichtungs- und Empfindlichkeitssteuerung des Umfelderkennungssystems oder der Kamera erfolgt. Da die Kamera nach vorn schaut und sich auch nach vorn bewegt, wird eine Vorhersage der zukünftigen Einstellungen möglich. Ein Verlassen eines oder der Erfassungsbereiche kann beispielsweise dann detektiert werden, wenn die Belichtungssteuerung des Umfelderkennungssystems in den Erfassungsbereichen über einen vorgegebenen Zeitraum einen stetigen Verlauf einnimmt.

Das Verlassen des Fahrzeugs eines Bereichs mit einem Schatten kann daher mit eindeutigen Mitteln detektiert werden. Zuerst sollte ein Bereich, der weit genug in Fahrtrichtung voran liegt, ermittelt werden, der ausreichend hell geworden ist. Dies kann aus der Graustufenstatistik des jeweiligen Erfassungsbereichs derart ermittelt werden, dass 20 Prozent der Pixel Helligkeitswerte aufweisen, die über einem verhältnismäßig hohen Schwellwert liegen müssen, und nicht gerade ein näher liegender Erfassungsbereich hell gewesen ist. Auch hier garantiert jedoch ein ausreichend großer Bereich der Pixel, dass man relativ sicher sein kann, dass der Schattenbereich verlassen wird.

Man kann dann überprüfen, wie oben beschrieben, dass der helle Bereich sich dem Fahrzeug mit ungefähr der Fahrzeuggeschwindigkeit nähert. Sobald diese Situation erfasst wird, kann signalisiert werden, dass ein Schatten bald oder demnächst verlassen wird. Es ist hierbei vorteilhaft, dass, wie schon erwähnt, die Parameter der Videokamera bzw. der Bildauswertung als Funktion der Zeit eingestellt werden, um ein optimal auswertbares Sensorbild zu produzieren. Zum Beispiel dadurch, dass die Bildverstärkung oder die Empfindlichkeit reduziert wird, bevor große Helligkeitsunterschiede auftreten bzw. bevor die eigene Belichtungssteuerung der Videokamera reagiert.

Es ist auch möglich, dass das Fahrzeug den dunklen Bereich (Schatten) graduell verlässt, wobei sich diese Situation aus den jeweiligen Helligkeits- oder Grauwertstatistiken der Erfassungsbereiche ablesen lässt, deren Werte sich dabei dann graduell zurück zu normaleren Werten bewegen, die einem durchschnittlichen Helligkeitswert entsprechen. Die Belichtungssteuerung der typischen Bildauswertesysteme versucht dabei eine Graustufe zwischen hell und dunkel und irgendwie beizubehalten. Wenn die Bildbereichsstatistiken für lang genug normal sind, dann kann man signalisieren, dass der Schatten nicht mehr als solcher gesehen wird, da die Bildauswertung jetzt justiert hat auf etwas was früher dunkel war und nun heller geworden ist. Die Detektion der normalen Belichtung kann dabei über eine Histogrammanalyse erfolgen, wobei das gewöhnlich bimodale Histogramm (ein Teil des Bildes ist hell, ein anderes Teil ist dunkel) in ein Histogramm mit einer annähernd unimodalen Intensitätsverteilung übergeht, während ein graduelles Verlassen des Schattens stattfindet.

Bei den erfindungsgemäßen Ausführungen werden in vorteilhafter Weise bewegliche Schatten ignoriert, da sie sich nicht mit der gleichen Geschwindigkeit wie der statische Schatten, zum Beispiel einer Brücke, relativ zum Fahrzeug bewegen. Solche statischen Schatten, die einen bestimmten Mindestabstand von der Videokamera in einem Fahrzeug haben, bewegen sich immer mit ungefähr der Geschwindigkeit des Fahrzeugs mit dem Umfelderkennungssystem auf dieses zu. Abweichungen hiervon treten beispielsweise durch Bewegungen, wie ein Nicken der Kamera im Fahrzeug, auf.

### Kurze Beschreibung der Zeichnung

Ein Ausführungsbeispiel der Erfindung wird in den Figuren der Zeichnung dargestellt und nachfolgend erläutert. Es zeigen:
Figur 1 eine schematische Darstellung eines Fahrzeugs mit einer Kamera als Bestandteil eines Umfelderkennungssystems, hier zur Auswertung von Schatten auf der Fahrbahn,
Figur 2 ein Blockschaltbild einer Auswerteeinheit des Umfelderkennungssystems,
Figur 3 eine schematische Darstellung von Erfassungsbereichen des Umfelderkennungssystems,
Figur 4 ein Kurvendiagramm von gemessen Helligkeitswerte in zwei Erfassungsbereichen nach der Figur 3 und
Figur 5 ein Ablaufdiagramm der Auswertung der erfassten Sensorbilder der Kamera.

### Beschreibung des Ausführungsbeispiels

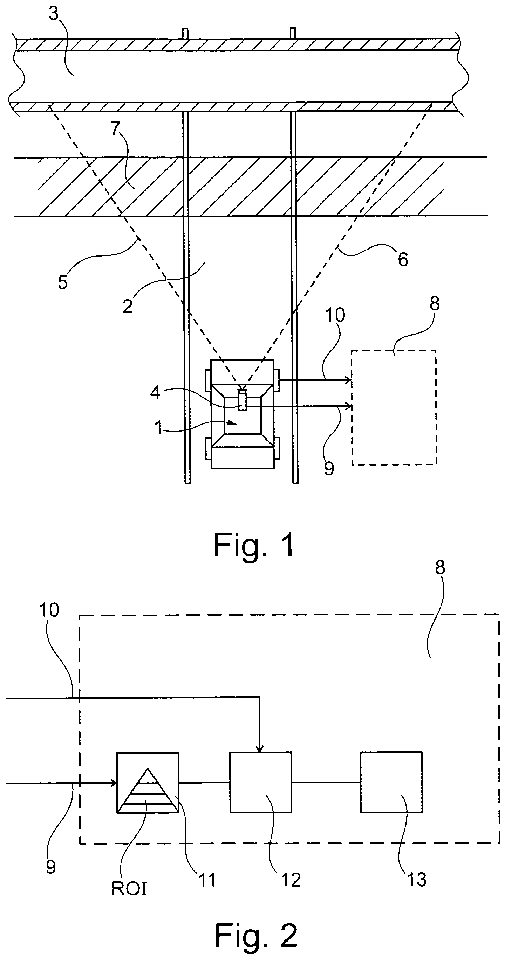

Aus Figur 1 ist schematisch eine Situation eines Fahrzeugs 1 als beweglicher Träger eines Umfelderkennungssystems erkennbar, das sich auf einer Fahrbahn 2 in Richtung einer Brücke 3 als statisches Objekt bewegt. Das Umfelderkennungssystem des Fahrzeugs 1 weist eine Kamera 4, insbesondere eine digitale Videokamera auf, die einen Bereich zwischen gestrichelten Linien 5 und 6 erfasst. Die Kamera 4 nähert sich hier einem Schatten 7, der von der Brücke 3 bei bestimmten angenommenen Lichtverhältnissen bzw. Sonneneinstrahlung auf die Fahrbahn 2 geworfen wird. In einer Auswerteeinrichtung 8 werden an einem Eingang 9 die digitalen Daten des aus Pixeln bestehenden Sensorbildes der Kamera 4 und zusätzlich zum Beispiel an einem Eingang 10 auch die aktuelle Geschwindigkeitsdaten des Fahrzeugs 1 ausgewertet.

In Figur 2 ist die Auswerteeinrichtung 8 nach der Figur 1 detaillierter gezeigt, wobei in einem ersten Baustein 1 die Daten des Sensorbildes der Kamera 1 hinsichtlich des Auftretens in vorgegebenen Erfassungsbereichen ROI (ROI = region of interest) ausgewertet und aus diesen Ergebnissen wird dann unter Hinzuziehung der Geschwindigkeitsdaten des Eingangs 10 in einem Baustein 12 die Erkennung und gegebenenfalls die Entfernung des Schattens 7 nach der Figur 1, wie nachfolgend erläutert, durchgeführt und in einer Anzeigevorrichtung 13 angezeigt oder mit entsprechenden Mitteln signalisiert. Als Ausgangssignal bzw. zur Signalisierung des Auftretens eines solchen Schattens kann auf einfache Weise zum Beispiel auch ein binäres flag im Umfelderkennungssystem gesetzt werden, das kennzeichnet, ob vor dem Fahrzeug eine plötzliche Schatten- oder Aufhellungssituation auftritt oder nicht und wenn es gewünscht wird, auch wie weit man von dieser Situation entfernt ist.

Mit dem gezeigten Ausführungsbeispiel ist es möglich, dass ein Verfahren zur Auswertung von Sensorbildern der Kamera 4 eines bildauswertenden Umfelderkennungssystems am Fahrzeug 1 im Straßenverkehr so ausgeführt werden kann, dass in zeitlich aufeinanderfolgenden Auswerteschritten relativ zur Umgebung dunkle Bereiche, hier der Schatten 7, in den Sensorbildern der Kamera 4 dahingehend ausgewertet werden, ob sich der Schatten 7 mit der Geschwindigkeit des Fahrzeugs 1 auf dieses zubewegt. Hierbei können jeweils Pixel, eine Reihe oder ein Bereich von Pixeln des Sensorbildes der Kamera 4, die relativ zur Umgebung dunkel sind, hinsichtlich ihres Abstandes zum Fahrzeug 1 in dem Baustein 12 der Figur 2 dahingehend ausgewertet werden, ob und in welchen Zeitabständen sie in Richtung auf den Träger definierte Erfassungsbereiche ROl (Baustein 11) innerhalb des Sensorbildes nacheinander belegen.

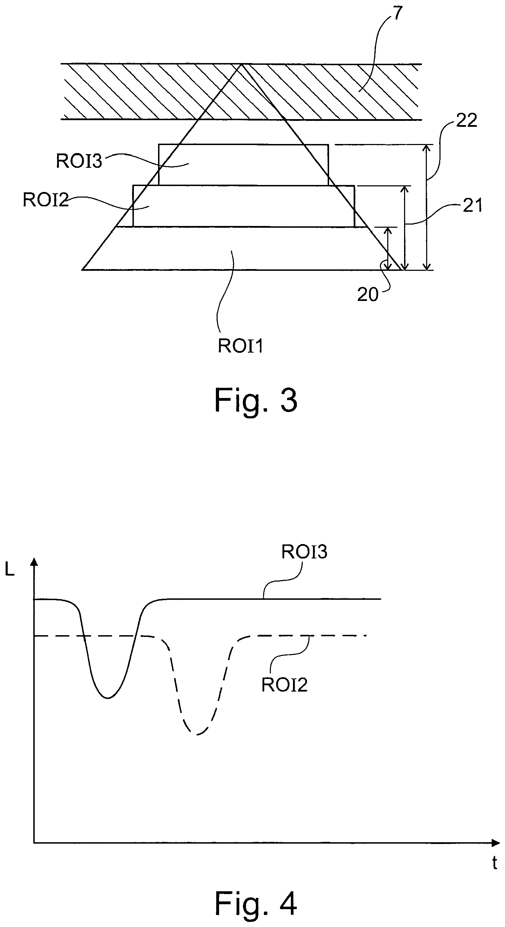

Die Geometrie der Kamera 4 ist in der Regel so gestaltet, dass mit der Annahme, dass die Fahrbahn 2 voran flach ist und dass die innen im Fahrzeug 1 angebrachte Kamera 1 nicht erheblich um die eigene Achse rollt, eine Reihe oder ein Pixel im Sensorbild mit jeweils einem aus Figur 3 zu entnehmenden Abstand 20, 21 oder 22 vor dem Fahrzeug 1 verbunden werden kann, zum Beispiel 20m als Abstand 20, 40m als Abstand 21 oder 60m als Abstand 22. Es können somit, wie aus der Figur 3 ersichtlich, Erfassungsbereiche ROI1, ROI2 du ROI3 als entsprechende Regionen im Sensorbild der Kamera 1 mit korrelierenden Abständen 20,21 und 22 konstruiert werden. Wenn in zeitlicher Fortentwicklung der Darstellung in der Figur 3 im Erfassungsbereich ROI3, der vom Fahrzeug 1weit entfernt ist, ein Schatten 7 als dunkler Bereich auftritt und sich mit der Geschwindigkeit des Fahrzeugs 1 dem Fahrzeug nähert, kann somit der Schatten 7 als stationärer Schatten genau lokalisiert werden. Es ist dabei ebenfalls vorteilhaft, wenn der momentane Nickwinkel der Kamera 1 bei jedem ausgewertetem Bild mit herangezogen wird.

Figur 4 zeigt den Verlauf von erfassten Helligkeitswerten L (L=Level) bzw. Graustufenwerten ROI3 und ROI2 über der Zeit t beim Durchlaufen eine Schattens 7. Hieraus ist erkennbar, dass durch ein Absinken und Wiederansteigen der Werte für den entfernten Erfassungsbereich ROI3 und zeitlich darauf folgend versetzt durch ein Absinken und Wiederansteigen der Werte für den näher liegenden Erfassungsbereich ROI2 eine zeitliche und räumliche Bestimmung des Schattens 7 möglich ist.

Eine Belegung eines Erfassungsbereichs ROI3, ROI2 oder ROI1 kann beispielsweise dann detektiert werden, wenn ca. 80 Prozent der Pixel dieses Erfassungsbereichs ROI3, ROI2 oder ROI1 einen Helligkeitswert oder eine Graustufe unterhalb einer vorgegebenen Schwelle aufweisen. Ein Verlassen der Erfassungsbereiche ROI3, ROI2 oder ROI1 kann dann detektiert werden, wenn ca. 20 Prozent der Pixel dieses Erfassungsbereichs ROI3, ROI2 oder ROI1 einen Helligkeitswert L oder Graustufe oberhalb einer vorgegebenen Schwelle aufweisen und dann gemäß Block 36 angezeigt werden.

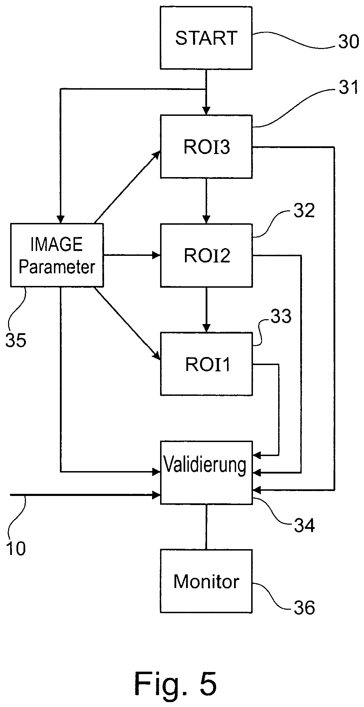

In Figur 5 ist ein Ablaufdiagramm dargestellt, das den zeitlichen Ablauf der Verarbeitung in der Auswerteschaltung 8 nach den Figuren 1 und 2 zeigt. Nach dem Beginn der Auswertung (Start 30) werden in Blöcken 31, 32 und 33 das Erscheinen und das Verlassen des Schattens 7 aus den Erfassungsbereichen ROI3, ROI2 oder ROI1 ermittelt und einen Block 34 zur Validierung und Weiterverarbeitung überlassen. Die Auswertung der Pixel, einer Reihe oder ein Bereich von Pixeln, in einem vorgegebenen Zeitraum nach dem Start 30 kann auch mit einem entsprechenden Parameterverteilungsalgorithmus 35 (Image Parameter) erfolgen, bevor eine automatische Belichtungs- und Empfindlichkeitssteuerung des Umfelderkennungssystems bzw. der Kamera 4 erfolgt. Ein Verlassen eines oder der Erfassungsbereiche kann beispielsweise dann detektiert werden, wenn die Belichtungssteuerung 35 in den Erfassungsbereichen ROI3, ROI2 oder ROI1 über einen vorgegebenen Zeitraum einen relativ stetigen Verlauf einnimmt.

Man kann dann noch überprüfen, ob unter Auswertung der Geschwindigkeit des Fahrzeugs 1 am Eingangs 10 der Auswerteschaltung 8 der Bereich der durch ein Verlassen des Schattens bewirkten Helligkeitsveränderungen sich dem Fahrzeug 1 mit ungefähr der Fahrzeuggeschwindigkeit nähert. Sobald diese Situation erfasst wird, kann mit dem Block 36 signalisiert werden, dass ein Schatten verlassen wird. Es ist hierbei vorteilhaft, dass, wie schon erwähnt, die Parameter der Kamera 4 bzw. der Bildauswertung 35 als Funktion der Zeit eingestellt werden, um ein optimal auswertbares Sensorbild zu produzieren. Zum Beispiel dadurch, dass die Bildverstärkung oder die Empfindlichkeit reduziert wird, bevor große Helligkeitsunterschiede auftreten bzw. bevor die eigene Belichtungssteuerung der Videokamera reagiert.

## Patentansprüche

1. Verfahren zur Auswertung von Sensorbildern eines bildauswertenden Umfelderkennungssystems an einem bewegten Träger, wobei der Träger ein Fahrerassistenzsystem aufweist, wobei eine Reihe oder ein Pixel im Sensorbild mit einem Abstand vor dem Träger verbunden wird, wobei ein Bereich von Pixeln des Sensorbildes, die relativ zur Umgebung dunkel sind, hinsichtlich ihres Abstandes zum Träger des bildauswertenden Umfelderkennungssystems ausgewertet werden,
**dadurch gekennzeichnet, dass** in zeitlich aufeinanderfolgenden Auswerteschritten relativ zur Umgebung dunkle Bereiche in den erfassten Sensorbildern dahingehend ausgewertet werden, ob sie sich im Prinzip mit der Geschwindigkeit des Trägers auf diesen zubewegen, wobei hierbei der Bereich von Pixeln, die relativ zur Umgebung dunkel sind, in zeitlich aufeinanderfolgenden Auswerteschritten dahingehend ausgewertet werden, ob und in welchen Zeitabständen sie in Richtung auf den Träger definierte Erfassungsbereiche (ROI) innerhalb des Sensorbildes nacheinander belegen, wobei eine Belegung eines Erfassungsbereichs dann detektiert wird, wenn eine relativ große Anzahl der Pixel dieses Erfassungsbereichs (ROI) einen Helligkeitswert (L) unterhalb einer vorgegebenen ersten Schwelle aufweisen, und dass diese dunklen Bereiche, die sich im Prinzip mit der Geschwindigkeit des Trägers auf diesen zubewegen, als Schatten (7) eines statischen Objekts erkannt werden und eine entsprechende Signalisierung vorgenommen wird.

2. Verfahren nach Anspruch 1, **dadurch gekennzeichnet, dass** ein Verlassen der Erfassungsbereiche dann detektiert wird, wenn eine relativ geringe Anzahl der Pixel dieses Erfassungsbereichs (ROI) einen Helligkeitswert (L) oberhalb einer vorgegebenen zweiten Schwelle aufweisen.

3. Verfahren nach Anspruch 2, **dadurch gekennzeichnet, dass** die eine relativ große Anzahl der Pixel 80% und die relativ kleine Anzahl der Pixel 20% betragen.

4. Anordnung zur Durchführung eines Verfahrens nach einem der vorhergehenden Ansprüche, **dadurch gekennzeichnet, dass** das bildauswertende Umfelderkennungssystems eine elektronische Kamera (4) enthält, die an einem Fahrzeug (1) als Träger angebracht ist und den in Fahrtrichtung vorderen Bereich des Fahrzeugs (1) auf einer Fahrbahn (2) derart fortlaufend erfasst, dass jeweils ein aus Pixeln aufgebautes Sensorbild vorhanden ist, deren Helligkeits- und gegebenenfalls Farbwerte die Umgebung abbilden, dass eine Auswerteeinheit (8) vorhanden ist, in der dunklen Bereiche im Sensorbild der Kamera (4) als Schatten (7) eines statischen Objekts erfassbar sind und eine entsprechende Signalisierung durchführbar ist, und dass die Auswerteeinheit (4) zusätzlich mit der mit anderen Mitteln erfassten Geschwindigkeit des Fahrzeugs (1) beaufschlagbar ist.

5. Anordnung nach einem der Ansprüche 4, **dadurch gekennzeichnet, dass** die Signalisierung mittels einer Anzeigeeinheit (13) erfolgt, in der das Erfassen, das Verlassen und der jeweilige Abstand des Schattens (7) zum Fahrzeug (1) anzeigbar ist.

6. Anordnung nach einem der Ansprüche 4 oder 5 **dadurch gekennzeichnet, dass** die dunkeln Bereiche durch eine Brücke (3), Überführung oder dergleichen hervorgerufen sind, deren Schatten (7) auf die Fahrbahn (2) vor dem Fahrzeug (1) geworfen ist.

7. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens oder einer Anordnung zur Durchführung eines Verfahrens in einem Umfelderkennungssystem nach einem der Ansprüche 1 bis 4 veranlassen.

## Claims

1. Method for evaluating sensor images of an image-evaluating surroundings-detection system on a moved carrier, wherein the carrier has a driver assistance system, wherein a series or a pixel is connected in the sensor image at a distance in front of the carrier, wherein an area of pixels of the sensor image which are dark in relation to the surroundings are evaluated in terms of their distance from the carrier of the image-evaluating surroundings-detection system, **characterized in that** areas in the captured sensor images which are dark in relation to the surroundings are evaluated in chronologically successive evaluation steps in order to determine whether in principle said dark areas are moving toward the carrier at the speed of said carrier, wherein here the area of pixels which are dark in relation to the surroundings is evaluated in chronologically successive evaluation steps in order to determine whether, and at what time intervals, they are successively congruent with captured areas (ROI), defined in the direction of the carrier, within the sensor image, wherein congruence with a captured area is detected if a relatively large number of the pixels of this captured area (ROI) have a brightness value (L) below a predefined first threshold, and **in that** these dark areas, which in principle are moving toward the carrier at the speed of said carrier, are detected as shadows (7) of a static object and corresponding signaling is performed.

2. Method according to Claim 1, **characterized in that** exiting from the captured areas is detected when a relatively small number of the pixels of this captured area (ROI) have a brightness value (L) above a predefined second threshold.

3. Method according to Claim 2, **characterized in that** the one relatively large number of pixels is 80% and the relatively small number of pixels is 20%.

4. Arrangement for carrying out a method according to one of the preceding claims, **characterized in that** the image-evaluating surroundings-detection system contains an electronic camera (4) which is mounted on a vehicle (1) as a carrier and continuously captures the area of the vehicle (1) which is at the front in the direction of travel on a roadway (2) in such a way that in each case a sensor image which is made up of pixels and whose brightness values and, if appropriate, color values depict the surroundings is present, **in that** an evaluation unit (8) is present in which dark areas in the sensor image of the camera (4) can be detected as shadows (7) of a static object, and corresponding signaling can be carried out, and **in that** the evaluation unit (4) can be additionally supplied with the speed of the vehicle (1) which is detected with other means.

5. Arrangement according to one of Claims 4, **characterized in that** the signaling takes place by means of a display unit (13) in which the detection of the shadow (7), the exiting therefrom and the respective distance of the shadow (7) from the vehicle (1) can be displayed.

6. Arrangement according to one of Claims 4 and 5, **characterized in that** the dark areas are caused by a bridge (3), flyover or the like whose shadow (7) is thrown onto the roadway (2) in front of the vehicle (1).

7. Computer program product stored on a medium which can be used by a computer, comprising computer-readable programming means which, when the computer program product is executed on a microprocessor with associated storage means or on a computer, cause the latter to carry out a method or to implement an arrangement for carrying out a method in a surroundings-detection system according to one of Claims 1 to 4.

## Revendications

1. Procédé pour l'évaluation d'images de capteur d'un système de reconnaissance d'environnement évaluant des images sur un support mis en mouvement, dans lequel le support comporte un système d'aide à la conduite, dans lequel une rangée ou un pixel de l'image de capteur est lié à une distance à l'avant du support, dans lequel une région de pixels de l'image de capteur, qui sont sombres par rapport à l'environnement, est évaluée en ce qui concerne sa distance par rapport au support du système de reconnaissance d'environnement évaluant des images,
**caractérisé en ce que**, lors d'étapes d'évaluation temporellement consécutives, des régions sombres par rapport à l'environnement sont évaluées dans les images de capteur détectées pour savoir si elles se déplacent en principe à la vitesse vers le support à la vitesse de ce dernier, dans lequel la région des pixels qui sont sombres par rapport à l'environnement est ainsi évaluée lors d'étapes d'évaluation temporellement consécutives pour savoir si et au cours de quels intervalles de temps lesdits pixels occupent des régions de détection définies (ROI) consécutives dans une direction orientée vers le support à l'intérieur de l'image de capteur, dans lequel une occupation d'une région de détection n'est détectée que lorsqu'un nombre relativement grand de pixels de ladite région de détection (ROI) présentent une valeur de luminosité (L) inférieure à un premier seuil prédéterminé, et **en ce que** lesdites régions sombres, qui se déplacent en principe vers le support à la vitesse de ce dernier, sont reconnues en tant qu'ombre (7) d'un objet statique et une signalisation correspondante est effectuée.

2. Procédé selon la revendication 1, **caractérisé en ce qu'**une sortie des régions de détection n'est détectée que lorsqu'un nombre relativement faible de pixels de ladite région de détection (ROI) présentent une valeur de luminosité (L) supérieure à un deuxième seuil prédéterminé.

3. Procédé selon la revendication 2, **caractérisé en ce que** ledit nombre relativement grand de pixels est de 80% et **en ce que** le nombre relativement faible de pixels est de 20%.

4. Équipement pour la mise en oeuvre d'un procédé selon l'une quelconque des revendications précédentes, **caractérisé en ce que** le système de reconnaissance d'environnement évaluant des images contient une caméra électronique (4) qui est montée sur un véhicule (1), en tant que support, et qui détecte en continu la région située à l'avant du véhicule (1) sur une chaussée (2) dans la direction de déplacement de manière à obtenir une image de capteur respective construite à partir de pixels dont les valeurs de luminosité et, le cas échéant, de couleur forment l'image de l'environnement, **en ce qu'**il est prévu une unité d'évaluation (8) dans laquelle des régions sombres dans l'image de capteur de la caméra (4) peuvent être détectées en tant qu'ombre (7) d'un objet statique et **en ce qu'**une signalisation correspondante peut être effectuée, et **en ce que** la vitesse du véhicule (1) détectée à l'aide d'autres moyens peut en outre être fournie à l'unité d'évaluation (4).

5. Équipement selon l'une quelconque des revendications 4, **caractérisé en ce que** la signalisation est effectuée au moyen d'une unité d'affichage (13) dans laquelle la détection, la sortie et la distance respective de l'ombre (7) par rapport au véhicule (1) peuvent être affichées.

6. Équipement selon l'une quelconque des revendications 4 ou 5, **caractérisé en ce que** les régions sombres sont provoquées par un pont (3), un autopont, ou autres, dont l'ombre (7) est projetée sur la chaussée (2) à l'avant du véhicule (1).

7. Produit de programme d'ordinateur stocké sur un support utilisable sur ordinateur, comprenant des moyens à programmes lisibles par ordinateur qui, lors de l'exécution du produit de programme d'ordinateur sur un microprocesseur comportant des moyens à mémoire associés ou sur un ordinateur, amènent celui-ci à mettre en oeuvre un procédé ou amènent un équipement à mettre en oeuvre un procédé dans un système de reconnaissance d'environnement selon l'une quelconque des revendications 1 à 4.
